# EUROPÄISCHE PATENTANMELDUNG

(11) **EP 1 357 515 A1**
(43) Veröffentlichungstag der Anmeldung: **29.10.2003**
(21) Anmeldenummer: 02008918.1
(22) Anmeldetag: 22.04.2002
(51) Int. Cl.: G06T 5/00, G06K 9/00

(54) **Verfahren zur Verarbeitung digitaler Bilddaten von fotografischen Bildern**

(71) Anmelder: Agfa-Gevaert AG, 51373 Leverkusen (DE)
(72) Erfinder: Hartmann, Klaus-Peter, 86938 Schondorf (DE); Keupp, Wolfgang, 81379 München (DE); Forrester, Ruth, 82110 Germering (DE)

(57) **Zusammenfassung**

Die Erfindung besteht in einem automatischen Verfahren zur Verarbeitung digitaler Bilddaten von fotografischen Bildern, insbesondere von Personen- und Portraitaufnahmen. Im Rahmen dieses Bildverarbeitungsverfahrens werden Bilddaten von Personenaufnahmen mittels einer personenspezifischen Bildverarbeitung bearbeitet, welche sich von der unterscheidet, die zur Bearbeitung anderer Bilddaten verwendet wird. Wesentlich ist, dass automatisch eine personenspezifische Bildverarbeitung gewählt wird, wenn mittels eines Objekterkennungsverfahrens Gesichter in den Bilddaten erkannt werden.

## Beschreibung

Die Erfindung betrifft ein Verfahren zur Verarbeitung digitaler Bilddaten von fotografischen Bildern von Personenaufnahmen nach dem Oberbegriff von Anspruch 1.

Bereits seit langem ist es in der Fotografie üblich Portraitaufnahmen weichzuzeichnen, so dass kleine, für das künstlerische Bild unwesentliche oder störende Details wie Hautunreinheiten verschwinden. Hierfür werden zumeist Objektive verwendet, die an Stelle einer gestochenen Schärfe weichere, vom Licht überstrahlte Konturen aufweisen. Am bekanntesten ist das für relativ große Brennweiten berechnete weichzeichnende Objektiv von Rodenstock. Die Weichzeichnung wird hier durch vorgesetzte siebartige Blenden erreicht, die unter anderem einen Licht beugenden Einfluss haben. Der Weichzeichnereffekt lässt sich aber auch mit jedem scharfzeichnenden Objekt durch Vorsatz planparelleler Filter erreichen, in deren vorderer Fläche flache Rillen eingeritzt sind, die das einfallende Licht zerstreuen. Um derartige Weichzeichnereffekte zu erreichen, müssen jedoch bei Portraitaufnahmen spezielle Aufnahmetechniken gewählt werden. Ist ein Bild dagegen mit herkömmlichen Objektiven ohne Weichzeichnereigenschaften aufgenommen worden, so zeigen sich gerade in Portraitaufnahmen oft ablenkende Details, wie kleine Pickel oder sonstige Rötungen, welche den Gesamteindruck des Bildes stören. Diese waren in der klassischen Fotografie nur durch Retuschen zu beheben.

Seit es möglich ist, fotografische Aufnahmen zu digitalisieren und diese eingescannten Bilder vor dem Printen mit Bildverarbeitungsprogrammen benutzerdefiniert zu bearbeiten ist es auch möglich, Aufnahmen von Personen, insbesondere Portraitaufnahmen, auch im Nachhinein einer besonderen Bearbeitung zu unterziehen, um beispielsweise Portraitaufnahmen künstlerische Aspekte zu Gute kommen zu lassen. So ist beispielsweise aus der US 6,200,738 ein Bildverarbeitungsverfahren bekannt, bei dem der Benutzer Parameter eingibt, nach denen Bildverarbeitungsalgorithmen wie Verschärfung, Dichtekorrektur, Farbkorrektur, etc. für ein ausgewähltes auf dem Bildschirm angezeigtes Bild durchgeführt werden sollen. Bei Bildern von Portraitaufnahmen verwendet der Benutzer Parameter, welche eine verminderte Verschärfung und Rauschreduktion bewirken. Durch das Reduzieren der Schärfe ergibt sich bei den Portraitaufnahmen ein verbesserter Bildeindruck, der eher dem eines weichgezeichneten Portraits entspricht. In diesem Bildverarbeitungsprogramm können auch Kornstärke, Gradation und Farben vom Benutzer mit Parametern besetzt werden, welche sich für Portraitaufnahmen jeweils als besonders vorteilhaft erwiesen haben. Das mit den eingegebenen Parametern bearbeitete Bild wird dem Benutzer vor dem Abbilden auf Fotopapier erneut am Bildschirm angezeigt, so dass er entscheiden kann, ob das Bild so gedruckt werden soll oder ob weitere Parameteränderungen notwendig sind.

Dieses Verfahren ist für die Bearbeitung einzelner, ausgewählter Bilder vorteilhaft, es kann jedoch beim Standardkopieren an fotografischen Printern in Fotolaboren nicht verwendet werden.
Es wäre jedoch wünschenswert, dass auch bei einem Hochgeschwindigkeits-Printer alle Aufnahmen besonders Personenaufnahmen mit den für Sie idealen Bedingungen wiedergegeben werden.

Aufgabe der vorliegenden Erfindung war es deshalb ein Bildverarbeitungsverfahren für Hochgeschwindigkeits-Printer zu entwickeln, bei dem Personenaufnahmen mit speziellen, für diese Aufnahmen optimalen Bedingungen bearbeitet werden.

Gelöst wird diese Aufgabe gemäß der Erfindung durch ein Verfahren zur Verarbeitung digitaler Bilddaten von fotografischen Bildern mit den Merkmalen von Anspruch 1. Weitere vorteilhafte Ausführungsformen sind Bestandteil der Unteransprüche im Zusammenhang mit der Beschreibung und den Zeichnungen.

Erfindungsgemäß wird eine personenspezifische Bildverarbeitung automatisch gewählt und zwar dann, wenn sich Gesichter auf der Aufnahme befinden. Wichtig ist dabei, dass das Erkennen der Gesichter in den Bilddaten ebenfalls automatisch erfolgt, so dass keine Bedienperson notwendig ist, um eine Personenaufnahme zu identifizieren. Die Identifikation von Gesichtern in den Bilddaten erfolgt erfindungsgemäß mittels Objekterkennungsverfahren. Derartige Objekterkennungsverfahren sind aus dem Bereich der Personenüberwachung oder Identitätskontrolle bekannt. Solche Verfahren im Bereich der Bildverarbeitung einzusetzen, eröffnet erst die Möglichkeit der Automatisierung dieses Bearbeitungsverfahrens. Ein entscheidender Vorteil dieser Objekterkennungsverfahren liegt darin, dass sie ausreichend schnell sind, um in fotografischen Kopiergeräten eingesetzt zu werden, da sie in der Regel auch bei Personenkontrollen, für die sie entwickelt wurden, in Echtzeit arbeiten müssen. Ferner zeichnen sich diese Verfahren durch eine sehr hohe Zuverlässigkeit aus, wodurch vermieden wird, dass fälschlicherweise nicht Personenaufnahmen mit personenspezifischen Bildverarbeitungsparametern bearbeitet werden. Dadurch kann eine hohe Fehlerquote bei der automatischen Parameterwahl bei der Bildverarbeitung vermieden werden.

Vorteilhafterweise werden zur Suche nach einem Gesichts mittels eines Objekterkennungsverfahrens nur die Grauwerte der Bilddaten verwendet. Da bei diesem Verfahren in der Regel ohnehin nur Dichteverläufe analysiert werden ist es völlig ausreichend, diesen reduzierten, nicht farbigen Bilddatensatz zu verwenden. Auf diese Weise kann viel Rechenzeit und Rechenkapazität bei der Verarbeitung der Bilder gespart werden.

Es ist besonders vorteilhaft, die Auflösung des Bilddatensatzes vor Anwendung des Objekterkennungsverfahrens zu reduzieren, um die immer noch relativ rechenzeitintensiven Algorithmen auf weniger Daten anzuwenden. Für eine zuverlässige Erkennung von Gesichtern ist es nämlich nicht notwendig, den für eine gute Reproduktion des Bildes erforderlichen, sehr hoch aufgelösten Bilddatensatz zu untersuchen. Auch auf diese Weise kann sehr viel Rechenzeit gespart werden.

Ein vorteilhaft zu verwendendes Objekterkennungsverfahren ist beispielsweise das im Bericht IS & T/SID Eighth-Colour-lmaging-Conference beschriebene Gesichtserkennungsverfahren, welches mit flexiblen Templates arbeitet. In diesem Verfahren verwendet man allgemeine Beispielgesichter, vergrößert, verkleinert und verschiebt diese, während man sie immer wieder in verschiedenen Positionen mit den Bilddaten vergleicht, um ähnliche Strukturen in den verglichenen Graustufenbildern zu finden. An der Stelle, an der sich die größte Übereinstimmung zwischen einem der gewählten und veränderten Beispielgesichtern und den Dichteverläufen in den Bilddaten ergibt, wird ein Ähnlichkeitswert festgelegt. Überschreitet dieser Ähnlichkeitswert eine bestimmte Schwelle, so geht man davon aus, dass in den Bilddaten ein Gesicht detektiert wurde. Dieses Verfahren arbeitet sehr zuverlässig, ist aber relativ aufwendig. Dennoch kann es im Rahmen eines Bildverarbeitungsverfahrens sehr gut für kleinere und langsamere Kopiergeräte verwendet werden, bzw. bei Verwendung eines reduzierten Datensatzes auch für Schnellere.

Ein weiteres vorteilhaftes Objekterkennungsverfahren ist das im IEEE Transactions on Computers, Vol. 42 No. 3 März 1993, beschriebene Verfahren, welches mit verformbaren Gittern arbeitet. In diesem Verfahren werden verformte Standardgitter mehrerer Vergleichsgesichter in beliebiger Orientierung über die Bilddaten verschoben. Durch Vergleichen der Fouriertransformierten der Standardgitter-Knotenpunkte mit der Fouriertransformierten des Bildinhalts an den den Knotenpunkten entsprechenden Bildstellen wird der Dichteverlauf von Gitter und Bildinhalt an den transformierten Stellen und deren Umgebung verglichen. In der Form und Position, an der sich die beste Übereinstimmung von verformten Standardgitter und Bildinhalt ergibt, wird das Gitter festgehalten und ein Ähnlichkeitswert gebildet. Sobald der Ähnlichkeitswert eine bestimmte Schwelle überschreitet, wird davon ausgegangen, dass im Bildinhalt ein Gesicht entsprechend des gewählten Standardgitters detektiert wurde. Auch dieses Verfahren arbeitet sehr zuverlässig, ist aber immer noch vergleichsweise rechenzeitintensiv. Aus diesem Grund bietet es sich ebenfalls insbesondere für langsamere Kopiergeräte oder in Detektionsverfahren, bei denen bereits eine Vorauswahl an Hand anderer Kriterien wie z. B. dem Vorhandensein von Hauttönen im Bild geschaffen wurde, an.

Um auch bei sogenannten Hochleistungsprintern, also sehr schnell arbeitenden Kopiergeräten eine automatische Auswahl von Personenaufnahmen treffen zu können, wird vor Anwendung des Objekterkennungsverfahrens immer eine Vorauswahl der zu untersuchenden Aufnahmen getroffen. Diese Vorauswahl kann beispielsweise dadurch erfolgen, dass nur Bilder untersucht werden, in denen Hauttöne vorkommen. Bilddaten die keinerlei Hauttöne aufweisen, können von vornherein als Nichtpersonenaufnahmen klassifiziert werden. Auf diese Weise müssen die rechenzeitaufwändigen Objekterkennungsverfahren nur auf eine bestimmte Anzahl von Bildern angewandt werden, was dazu führt, dass die Kopierleistung des Gerätes kaum herabgesetzt wird. Ein anderes mögliches Vorauswahlkriterium besteht darin, dass zusammenhängende Hauttonflächen in den Bilddaten auftreten müssen.

Insbesondere in sehr schnell arbeitenden automatischen Printern wird also an Hand von Kriterien wie beispielsweise der Hautfarbe eine Vorauswahl von Bildern getroffen, welche möglicherweise Personenaufnahmen beinhalten. Diese werden anschließend mittels eines Objekterkennungsverfahrens untersucht, wobei herausgefunden werden soll, ob sich Gesichter in den Bildern befinden. Sobald Gesichter in diesen Bildern gefunden werden, werden diese automatisch einer personenspezifischen Bildverarbeitung unterzogen. Eine personenbezogene Bildverarbeitung kann sich hierbei beispielsweise auf das gesamte Bild beziehen. So kann eine Personenaufnahme beispielsweise dadurch ansprechender gestaltet werden, dass sie weniger verschärft wird als andere Aufnahmen, was zu einem weicheren Gesamteindruck des Bildes führen würde. Es kann auch sinnvoll sein beispielsweise das gesamte Bild etwas rötlicher zu tönen, so dass ein wärmerer Eindruck entsteht.

Es ist jedoch oft vorteilhafter eine spezifische Bildverarbeitung, welche sich auf die Bilddaten des Gesichts beschränkt, zu verwenden. Dadurch kann erreicht werden, dass das Gesicht den gewünschten weicheren, wärmeren Eindruck vermittelt, wobei die übrigen Bilddetails unverändert bleiben. Dies kann insbesondere dann gewünscht sein, wenn einerseits eine Person, andererseits aber beispielsweise ein Urlaubsmotiv aufgenommen worden ist. In diesem Fall soll zwar das Gesicht ansprechend wirken, das Urlaubsmotiv, wie beispielsweise der Eiffelturm oder Ähnliches, aber keineswegs verunschärft werden. Dieses Vorgehen lässt sich erst durch die Erfindung verwirklichen. Erst dadurch, dass mittels des Objekterkennungsverfahrens die Gesichter in den Bilddaten eindeutig identifiziert sind, können diese gesondert verändert werden.

Besonders vorteilhaft ist es jedoch, nicht das vollständige Gesicht weichzuzeichnen, sondern nur die hautfarbigen Bereiche des Gesichts. Dadurch wird erreicht, dass beispielsweise Augen und Mund, welche nicht zu den hautfarbigen Bereichen zählen und somit nicht weichgezeichnet werden weiterhin sehr detailliert und damit sehr präsent und charakteristisch wirken. Dadurch bleibt insbesondere der Eindruck eines sehr scharfen Bildes erhalten, obwohl die Hautflächen weich erscheinen und damit störende Details in diesen Gesichtflächen reduziert bzw. entfernt sind.

An Stelle der hautfarbigen Bereiche können auch die dichtehomogenen Bereiche des Gesichts, also Bereiche in denen sich keine Kanten befinden, weichgezeichnet werden. Auch mit dieser Auswahl werden Detailunreinheiten in größeren homogenen Gesichtsflächen beseitigt, ohne dass dabei die Deutlichkeit von Augen und Mund sowie anderen Gesichtscharakteristika vermindert wird.

Bei Aufnahmen, welche als Personenaufnahmen automatisch identifiziert wurden, ist es vorteilhaft den roten Farbanteil zu erhöhen, da damit ein wärmerer Eindruck des Bildes vermittelt wird. Dies bewirkt, dass die aufgenommenen Personen freundlicher aussehen und das Foto damit ansprechender wirkt.

Um zu vermeiden, dass der gesamte Bildeindruck zu sehr verfälscht wird, ist es besonders vorteilhaft hier auch nur die hautfarbigen Bereiche zu manipulieren. Insbesondere dann, wenn die Größe des Gesichts einen Anteil von mehr als 20 % der gesamten Bildfläche einnimmt, was darauf hindeutet, dass es sich um eine Portraitaufnahme handelt, ist es oftmals sinnvoll nur die hautfarbigen Partien des Gesichts rötlicher zu gestalten. Damit erhält das Gesicht einen freundlicheren Anschein, ohne dass die Farbe beispielsweise der Haare oder der Umgebung verändert wird.

Eine weitere vorteilhafte Möglichkeit eine Personenaufnahme ansprechender zu machen ist es, Dichteschwankungen der Bilddaten innerhalb der hautfarbigen Bereiche von Gesichtern auszugleichen. Dadurch dass Kontrastsprünge in den hautfarbigen Bereichen des Gesichts reduziert werden, werden ebenfalls störende Details reduziert, aber auch beispielsweise Falten im Gesicht vermindert. Dadurch erhält die Gesichtsaufnahme einen ansprechenderen, strahlenderen Eindruck.

Besonders vorteilhaft ist es, eine personenspezifische Bildverarbeitung erst dann automatisch zu wählen, wenn das Gesicht einen größeren Anteil des Bildes einnimmt. Falls sich nämlich in beispielsweise einer Landschaftsaufnahme Personen befinden, von denen nur kleinere Gesichter zu sehen sind, hat es sich als nachteilig erwiesen derartige Gesichter zu bearbeiten. Falls ganz kleine Gesichter weichgezeichnet werden, kann es geschehen, dass sämtliche Gesichtsstrukturen verloren gehen. Dies darf keinesfalls geschehen. Deshalb werden erfindungsgemäß Gesichter erst dann automatisch bearbeitet, falls die Größe des Gesichts mehr als 10 % der gesamten Bildfläche beträgt. Erst dann kann davon ausgegangen werden, dass das Gesicht einen ausreichend großen Anteil des Bildes dominiert, so dass es notwendig ist eine gesichtsspezifische Bearbeitung vorzunehmen. Sobald also die Gesichtsgröße als Kriterium für eine automatische, personenspezifische Bildbearbeitung gewählt wird, kann dadurch sichergestellt werden, dass keine Konturen in zu kleinen Gesichtern zerstört werden, andererseits ist es aber auch erst bei einer ausreichend großen Gesichtsgröße notwendig einen, auf das Gesicht und die Person abzielenden künstlerischen Gestaltungsaspekt in das Bild zu bringen. Aus diesem Grund wird erfindungsgemäß die Gesichtsgröße bestimmt, sobald ein Gesicht in den Bilddaten identifiziert wurde. Schließlich wird der Anteil des Gesichts an der Gesamtbildfläche ermittelt und mit einem Schwellwert verglichen, oberhalb dem erst automatisch eine personenspezifische Bildverarbeitung gewählt wird. Als vorteilhaft hat sich hier ein Anteilsfaktor von mindestens 10 % des Gesichts herausgestellt. Es ist jedoch auch möglich diesen Wert kleiner oder größer zu wählen, je nach dem was dem Benutzer als vorteilhaft erscheint. Dies kann beispielsweise auch daran geknüpft werden, was außer dem Gesicht noch an Bildinformation auf dem Bild enthalten ist. Befindet sich außer dem Gesicht noch zusätzlich viel Detailinformation auf dem Bild, so kann davon ausgegangen werden, dass das Gesicht bzw. die Person nur ein nebenrangiger Teil des Bildes ist und nicht bezweckt war, eine eigentliche Portraitaufnahme zu erstellen. In diesem Fall ist es sinnvoller den Faktor, ab dem automatisch eine personenspezifische Bildverarbeitung gewählt wird, höher anzusetzen. Zeigt das Bild dagegen außer dem Gesicht sehr wenig Detailinformation, so ist anzunehmen, dass der Fotograf beabsichtigte hauptsächlich die Person darzustellen. In diesem Fall kann es sinnvoll sein auch bei einem Gesichtsanteil von weniger als 10 % der Gesamtbildfläche bereits eine personenspezifische Bildverarbeitung zu wählen.

Besonders vorteilhaft ist es, verschiedene personenspezifische Bildverarbeitungsmöglichkeiten vorzusehen, welche je nach Größe des Gesichts und damit nach Dominanz der Person im Bild gewählt werden. So kann beispielsweise bei einer Gesichtsgröße von weniger als 10 % der Bildfläche auch eine personenspezifische Bildverarbeitung gewählt werden, welche sich aber auf das Bild als Gesamtes bezieht. In diesem Fall kann beispielsweise das gesamte Bild weichgezeichnet werden oder das gesamte Bild etwas rötlicher gemacht werden oder sonstige für eine Person vorteilhafte Bildmanipulation vorgenommen werden. Beträgt die Bildfläche jedoch mehr als 10 %, können Manipulationen vorgenommen werden, welche sich nur auf das Gesicht bzw. nur auf die Person beziehen. In diesem Fall wird die Aufnahme als Portraitaufnahme klassifiziert, da bei einer Gesichtsgröße von mehr als 10 % doch davon auszugehen ist, dass das Gesicht bzw. der Kopf auf dem Foto eine sehr dominante Rolle einnimmt. Überschreitet die Gesichtsgröße dagegen mehr als 20 % so wird die Aufnahme als Großportrait klassifiziert. In diesem Fall ist das Portrait wirklich dominant, die zusätzlich auf dem Bild aufgenommenen Informationen sind nur noch Hintergrund. In derAbsicht des Fotografen lag es somit offensichtlich eine reine Portraitaufnahme zu machen, in der das Gesicht der aufgenommenen Person möglichst vorteilhaft zur Geltung kommt. Die hier angegebenen Prozentzahlen sind Richtgrößen, die sich als besonders vorteilhaft erwiesen haben, sie können aber auch je nach Geschmack des Benutzers variiert werden.

Sobald nun an Hand der Gesichtsgröße ermittelt wurde, dass es sich um eine Großportraitaufnahme handelt, ist es erfindungsgemäß sehr vorteilhaft automatisch eine Bildverarbeitung anzuwenden, welche einer reinen Portraitaufnahme die notwendigen künstlerischen Gestaltungsaspekte verleiht. Hier ist es besonders vorteilhaft, das Gesicht in der Großaufnahme, innerhalb des Bildes zu zentrieren. Oftmals passiert es dem Laienfotografen, dass das Portrait nicht optimal im Bild angeordnet ist. Da es aber zentraler Bestandteil des Bildes sein soll, ist es sehr vorteilhaft, wenn es sich auch im Zentrum des Bildes befindet. Dies wird automatisch durch die Bildverarbeitung gewährleistet. Es ist auch vorteilhaft, das gesamte Bild zu formatieren, so dass sich zwischen Gesicht und Bildhintergrund ein für eine Portraitaufnahme ideales Verhältnis ergibt. So kann beispielsweise ein Gesicht, dessen Flächenanteil gerade eben über 20 % beträgt, welches aber von einem sehr homogenen, also mit wenig Bildinformation behafteten, Hintergrund umgeben ist vorteilhafterweise vergrößert wiedergegeben werden, da damit gewährleistet wird, dass das Gesicht besser wiedergegeben wird, wohingegen der neutrale Hintergrund auf ein vernünftiges Maß reduziert wird. Bei einer Portraitaufnahme kann es oftmals sinnvoll sein auch das gesamte Bild zu verunschärfen, dadurch wird einerseits gewährleistet, dass das Gesicht weichgezeichnet ist und störende Details verschwinden, andererseits aber auch bewirkt, dass von der Portraitaufnahme ablenkende Details im Hintergrund weniger scharf und damit weniger dominant erscheinen, was wiederum das Portrait ins Zentrum der Aufmerksamkeit lenkt und damit künstlerisch ein schöneres Bild ergibt. Falls sich im Hintergrund jedoch keine starke Detailinformation ausmachen lässt, ist es oftmals sinnvoll den Hintergrund im Original zu belassen und nur die Gesichtspartien zu bearbeiten.

Gerade bei einer Portraitaufnahme, in der das Gesicht einen sehr großen Anteil an der Bildfläche hat, ist es vorteilhaft, charakteristische Partien des Gesichts wie Augen und Mund oder Nase bzw. die Augenbrauen nicht weichzuzeichnen, sondern entweder im Original zu belassen oder aber noch zu verschärfen, um einen brillanteren Eindruck dieser Partien zu erzeugen. Damit macht das gesamte Bild beim Hinschauen einen sehr brillanten, scharfen Eindruck, obwohl homogene Hautflächen verunschärft worden sind, um störende Details zu eliminieren.

Besonders vorteilhaft ist es des Weiteren, die direkte Gesichtsumgebung, also insbesondere die Haare, genauso wie die charakteristischen Gesichtsmerkmale zu behandeln und entweder im Original zu belassen oder zusätzlich zu verschärfen. Auch dadurch bleibt der Eindruck eines brillanten, scharfen Bildes erhalten, obwohl Partien des Bildes verunschärft worden sind.

Eine weitere sehr vorteilhafte Maßnahme zur automatischen Bearbeitung eines Portraits besteht darin, extrem helle Partien in den Hautflächen der Gesichter leicht abzudunkeln. Dadurch ist es möglich, störende Glanzlichter in der Portraitaufnahme im Nachhinein automatisch zu retuschieren. Auf diese Weise erscheint das Gesicht noch sanfter und homogener.

Eine weitere sehr vorteilhafte Maßnahme ist es, die Gesichtsumgebung, insbesondere außerhalb der verschärften Haarpartie, zum Bildrand hin zunehmend zu verunschärfen, so dass der Eindruck eines Filters entsteht, welcher in der Regel bei Portraitaufnahmen im Studio verwendet wird, um die Aufmerksamkeit des Betrachters in erster Linie auf das Portrait zu ziehen. Dies sollte jedoch erst bei einem sehr dominanten Portrait realisiert werden, da bei dieser Maßnahme natürlich der Hintergrund sehr stark verändert, sprich sehr stark zurückgedrängt wird.

Es zeigt:

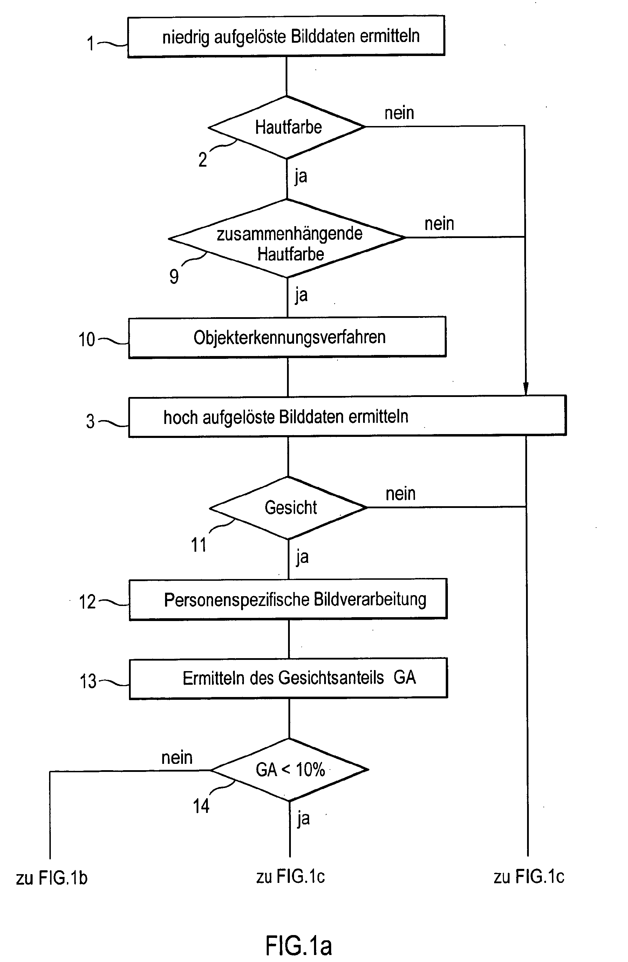

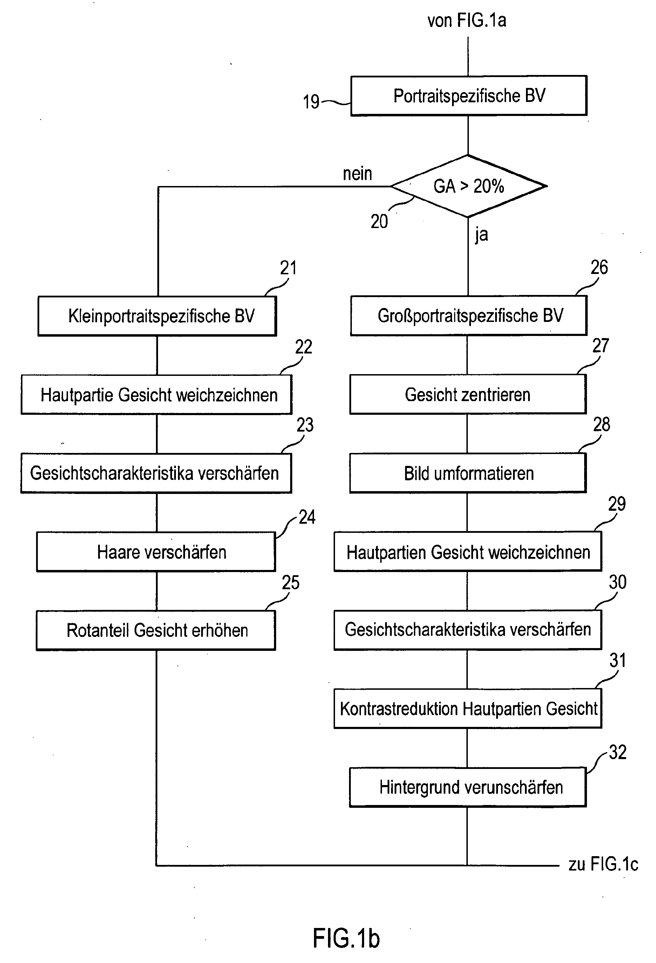

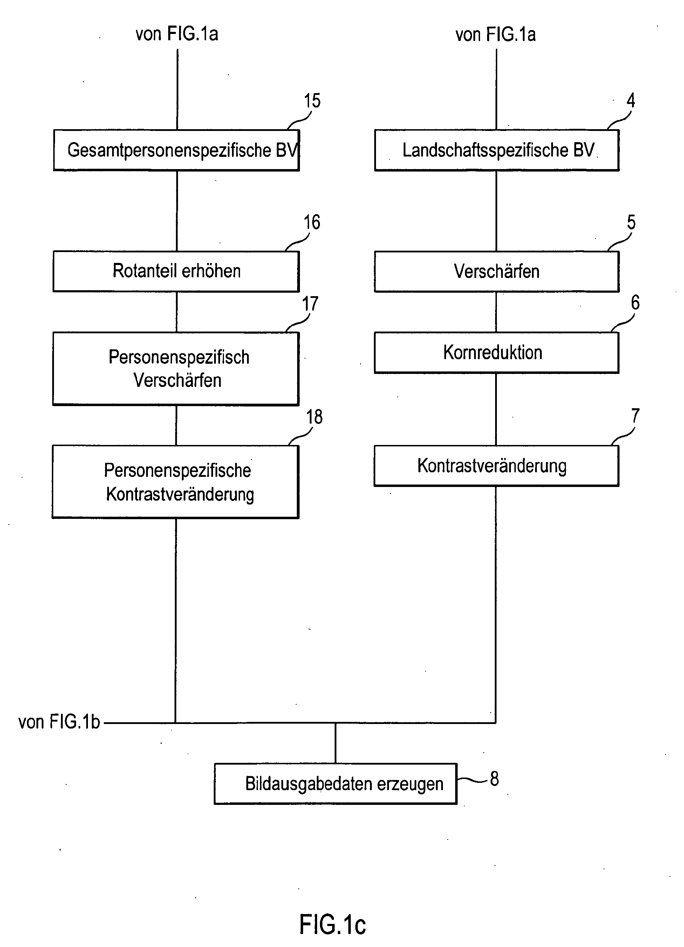

- Fig. 1: zeigt ein Ablaufschema eines erfindungsgemäßen Bildverarbeitungsverfahrens.

In einem 1. Schritt des Bildverarbeitungsverfahrens werden niedrig aufgelöste Bilddaten ermittelt. Dies kann beispielsweise durch den Prescan eines fotografischen Films geschehen. In diesem Fall werden die Bilddaten an Hand eines schnell abtastenden niedrig auflösenden Scanners, in der Regel eines Zeilenscanners, ermittelt. Niedrig aufgelöste Bilddaten können aber auch dadurch ermittelt werden, dass der fotografische Film hoch aufgelöst abgetastet wird, die Bilddaten für spätere Anwendungen abgespeichert werden und aus diesem hoch aufgelösten Bilddatensatz ein niedrig aufgelöster Satz gebildet wird. Dieses Vorgehen ist sinnvoll, wenn nur eine Abtasteinrichtung im Gerät verwendet wird oder wenn bereits digitale Bilddaten beispielsweise von einer digitalen Kamera vorliegen. Dieser niedrig aufgelöste Bilddatensatz dient zur Analyse des Bildinhalts. Für diesen Zweck ist eine niedrige Auflösung völlig ausreichend und die Bearbeitungsdauer des Bildes kann deutlich reduziert werden, wenn nur niedrig aufgelöste Bilddaten untersucht werden. So werden die Bilddaten in einem Schritt 2 daraufhin untersucht, ob hautfarbige Daten im Datensatz enthalten sind.

Sind keine hautfarbigen Daten enthalten, so kann davon ausgegangen werden, dass es sich um landschaftsspezifische Bilddaten, also eine Landschaftsaufnahme, ein Stilleben oder Ähnliches, handelt. Zu diesen landschaftsspezifischen Bilddaten werden die hoch aufgelösten Bilddaten ermittelt, indem der Film neu abgetastet wird oder digitale Bilddaten aus dem Speicher entnommen werden. Dies geschieht in einem 3. Bildverarbeitungsschritt. Die hoch aufgelösten Bilddaten werden in einem Schritt 4 einer landschaftsspezifischen Bildverarbeitung unterzogen. Dabei werden in Schritten 5, 6 und 7 übliche Bildverarbeitungsverfahren wie Verschärfung, Kornreduktion oder Kontrastveränderung angewandt. Es können auch zusätzlich weitere bekannte Bildverarbeitungsalgorithmen eingesetzt werden. In einem Schritt 8 werden Bildausgabedaten erzeugt, indem Printer spezifische Kennlinien auf die Bilddaten angewandt werden. Damit steht das Bild zur Ausgabe bereit und kann auf jedem Ausgabemedium wie Bildschirm, Fotografischem Printer, Tintenstrahldrucker, etc. wiedergegeben werden. Werden dagegen in dem nieder aufgelösten Bilddatensatz hautfarbige Daten identifiziert, so wird in einem Schritt 9 untersucht, ob es im Datensatz zusammenhängende hautfarbige Gebiete gibt. Falls keine zusammenhängenden hautfarbigen Gebiete identifiziert werden können, ist davon auszugehen, dass der ermittelte hautfarbige Punkt zufällig diese Farbe aufweist, aber zu keiner Hautpartie gehört. Auch in diesem Fall wird von einer Landschaftsaufnahme oder Ähnlichem ausgegangen und die schon beschriebene landschaftsspezifische Bildverarbeitung angewandt, nachdem hoch aufgelöste Bilddaten ermittelt wurden.

Werden dagegen zusammenhängende hautfarbige Gebiete im Bilddatensatz ermittelt, so wird ein Objekterkennungsverfahren auf die Bilddaten angewandt. Im Rahmen dieses Objekterkennungsverfahrens wird in einem Schritt 10 ermittelt, ob sich Gesichter in den Bilddaten befinden. Sobald dies geschehen ist, ist die Voranalyse des Bildes beendet, die hoch aufgelösten Bilddaten werden auf jeden Fall ermittelt, auch wenn es sich um keine Landschaftsaufnahme handelt. Anschließend wird wiederum in einem Schritt 11 die Zuordnung zu einer landschaftsspezifischen oder personenspezifischen Aufnahme getroffen. Ist kein Gesicht vorhanden, so handelt es sich um eine landschaftsspezifische Aufnahme, die entsprechende, schon beschriebene Bildverarbeitung wird angewandt. Konnte dagegen mittels des Objekterkennungsverfahrens ein Gesicht identifiziert werden, so wird in einem Schritt 12 die personenspezifische Bildverarbeitung begonnen. Hierzu wird in einem Schritt 13 der Gesichtsanteil in den Bilddaten ermittelt. Dieser Anteil gibt den prozentualen Anteil des Gesichts an der Gesamtbildfläche wieder und soll ein Maß dafür sein, ob das Gesicht im Bild dominant ist, also das Bild als Portraitaufnahme behandelt werden kann, oder ob die Gesichter eher klein und im Hintergrund sind, so dass davon ausgegangen werden kann, dass zwar Personen auf dem Bild aufgenommen wurden, aber es sich entweder um eine Gruppenaufnahme handelt oder die Person in Verbindung mit anderen Motiven festgehalten wurde. Dies wird gefolgert, sobald der Gesichtsanteil in einem Schritt 14 unter 10 % der Gesamtbildfläche liegen.

In diesem Fall kann von einer Personengruppe oder der Aufnahme einer Gesamtperson auf der Aufnahme eines Urlaubsmotives oder Ähnlichem geschlossen werden, in einem Schritt 15 wird eine gesamtpersonenspezifische Bildverarbeitung gestartet. In dieser können in Schritten 16, 17 und 18 personenspezifische Bildverarbeitungen eingesetzt werden. So wird beispielsweise der Rotanteil der gesamten Aufnahme oder, je nach geschmacklicher Voreinstellung des Benutzers, nur des Gesichts erhöht, um dem Gesamtbild einen wärmeren Eindruck zu verleihen. Ferner können personenspezifische Verschärfungsparameter gewählt werden, welche z. B. eine geringere Verschärfung als bei landschaftsspezifischer Bildverarbeitung bewirken. Dadurch wird zwar die Detailinformation im Bild insgesamt stärker hervorgehoben, die Gesichtspartien der Personen aber nicht all zu stark verhärtet. Ebenso ist bei einer Gesamtpersonenaufnahme eine personenspezifische Kontrastveränderung wünschenswert. Hier kann es vorteilhaft sein, in den Gesichtern eine Kontrastreduktion vorzunehmen, so dass beispielsweise Schlagschatten in den Gesichtern abgemildert werden. Im Prinzip ist es möglich, nach Identifikation einer Gesamtpersonenaufnahme, alle anzuwendenden Bildverarbeitungsschritte so zu modifizieren, dass sie besonders vorteilhaft auf Personen wirken.

Wurde im Rahmen der personenspezifischen Bildverarbeitung 12 ein Gesichtsanteil ermittelt, welcher über 10 % der Bildfläche ausmacht, so wird in Schritt 19 eine portraitspezifische Bildverarbeitung angewandt. Hierzu wird in einem Schritt 20 überprüft, ob der Gesichtsanteil über 20 % der Fläche liegt oder nicht. Liegt der Gesichtsanteil unter 20 % der Fläche, so wird in Schritt 21 eine kleinportraitspezifische Bildverarbeitung aktiviert. In dieser wird davon ausgegangen, dass der Fotograf eine Portraitaufnahme machen wollte, diese aber nicht vollständig das Bild dominieren soll. Somit ist es Ziel der kleinportraitspezifischen Bildverarbeitung das Portrait zu verbessern, den übrigen Bildinhalt aber im Wesentlichen beizubehalten. Kleinportraitspezifische Bildverarbeitungsschritte bestehen beispielsweise darin, in einem Schritt 22 die Hautpartien des ermittelnden Gesichts weichzuzeichnen. Das Weichzeichnen digitaler Daten erfolgt durch Anwenden von Filtern auf die Bildpunkte des Gesichts. Im Wesentlichen werden hierbei die hochfrequenten Anteile der Bilddaten, welche im Gesicht liegen und hautfarbig sind, eliminiert. Prinzipiell sind hier alle Algorithmen einsetzbar, welche niederfrequentere, verunschärfte Bilddaten zum Ergebnis haben. In einem Schritt 23 werden dagegen die Charakteristika der Gesichter wie Augen, Mund und Nase verschärft bzw. scharf belassen, also vom Weichzeichnen ausgenommen. Diese charakteristischen Gesichtsmerkmale können entweder im Rahmen des Objekterkennungsverfahrens identifiziert werden oder sie werden nach Erkennung des Gesichts, beispielsweise an Hand von Kantendetektionsverfahren, ermittelt. Bei der Weichzeichung des Gesichts ist es wesentlich, die Gesichtscharakteristika scharf zu belassen oder zu verschärfen, um einen brillanten Eindruck des Gesamtbildes zu erhalten. Ebenso können in einem Schritt 24 die Haare verschärft werden. Das heißt ein Verschärfungsalgorithmus wird auf die direkte Umgebung des Gesichts angewandt. Des Weiteren wird in einem Schritt 25 der Rotanteil innerhalb des Gesichts erhöht, um einen wärmeren Gesichteindruck zu bewirken. Hier sind beliebige weitere Manipulationen möglich, welche dem Fotografen seit langem bekannt sind, um Portaits besonders angenehm zu gestalten. So können auch Verlaufsfilter einberechnet werden oder das Bild vom Portrait weg zum Rand hin verunschärft werden etc.. Nach Anwendung der kleinportraitspezifischen Bildverarbeitung werden schließlich auch hier die Bildausgabedaten durch Anwenden von Printerkennlinien im Schritt 8 erzeugt.

Liegt der ermittelte Gesichtsanteil dagegen oberhalb von 20 % der Gesamtbildfläche, so wird davon ausgegangen, dass es sich um eine reine Portraitaufnahme handelt und eine großportraitspezifische Bildverarbeitung in einem Schritt 26 gestartet. Ziel der großportraitspezifischen Bildverarbeitung ist es, die Aufnahme in ein künstlerisch wertvolles Großportrait zu verwandeln. Hierzu wird beispielsweise in einem Schritt 27 das Gesicht ins Zentrum des Bildes gesetzt. Hierzu kann das Bild in einem Schritt 28 umformatiert werden, um das optimale Verhältnis von Gesicht zu Bildhintergrund zu bewirken. Dadurch wird das Gesicht im richtigen Verhältnis ins Zentrum der Aufmerksamkeit gesetzt, auch wenn der Fotograf dies nicht geschafft hat. Als anzuwendende Maße werden hier beispielsweise der sogenannte goldene Schnitt oder sonstige in Künstlerkreisen bekannte Verhältniswerte angewandt. Auch bei einem Großportrait ist es wünschenswert die Hautpartien des Gesichts in einem Schritt 29 weichzuzeichnen und in einem Schritt 30 die Charakteristika des Gesichts scharf zu belassen bzw. zu verschärfen, so dass störende Details im Gesicht eliminiert werden, die gesichtscharakteristischen Merkmale aber deutlich hervortreten. Ebenfalls wünschenswert ist es oftmals, in den hautfarbigen Partien des Gesichts die Kontraste zu reduzieren. Dadurch können Schlagschatten abgemildert sowie Falten im Gesicht reduziert werden. Auch dies macht einen freundlicheren Gesichtseindruck. Da angenommen wird, dass bei einem Gesichtsanteil über 20 % eine reine Portraitaufnahme beabsichtigt wurde, ist in diesem Bild davon auszugehen, dass der Hintergrund keine starke Relevanz hat. Deswegen ist es vorteilhaft in einem Schritt 32 den Hintergrund ebenfalls zu verunschärfen. Hierbei sollte jedoch beachtet werden, dass Haare, welche das Gesicht umrahmen, eher verschärft werden sollen und die Verunschärfung erst außerhalb der Haare beginnt. Dadurch bleibt das Bild brillanter. Möglich wäre auch, eine Verunschärfung, welche vom Gesicht weg bis zum Bildrand hin zunimmt, anzuwenden. Auch Großportraitaufnahmen können verschiedenen anderen bekannten Portraitverbesserungen unterzogen werden. So kann es beispielsweise ebenfalls vorteilhaft sein, den Rotanteil im Gesicht oder im gesamten Bild zu erhöhen bzw. beispielsweise die Körnigkeit der Bilddaten insbesondere im Gesicht stärker zu reduzieren oder sonstige bekannte Verbesserungen vorzunehmen. Nach Anwendung der großportraitspezifischen Bildverarbeitung werden erneut in einem Schritt 8 Bildausgabedaten erzeugt.

Zu diesem Ausführungsbeispiel ist zu bemerken, dass alle Bildverarbeitungsverfahren innerhalb der landschaftsspezifischen Bildverarbeitung der portraitspezifischen Bildverarbeitung oder auch anderer Bildverarbeitungen auch parallel vorgenommen werden können. Dadurch ist es möglich zusätzlich Rechenzeit zu sparen. Es wäre auch möglich, auf alle Bilddaten zuerst dieselbe Bildverarbeitung mit Verschärfung, Kornreduktion, Kontrastveränderung etc. anzuwenden und anschließend die Bilder zu ermitteln, welche Gesichter enthalten und diese zusätzlich gesichtsspezifisch zu bearbeiten. In diesem Fall würden die portrait- und personenspezifischen Bildverarbeitungen zusätzlich zu der herkömmlichen Bildverarbeitung angewandt. Prinzipiell kann die Einteilung von Kleinportrait, Großportrait und Gesamtpersonen an Hand des Gesichtsanteils auch durch andere Prozentanteile festgelegt werden. Die hier angegebenen Anteile haben sich aber als besonders vorteilhaft erwiesen. Wichtig ist nur, dass nach Erkennen des Gesichts die Größe des Gesichtsanteils im Verhältnis zur Bildfläche ermittelt wird, so dass eine portrait- und personenspezifische Bildverarbeitung erst ab einer festgelegten Gesichtsgröße vorgenommen wird und nicht auf jedes noch so kleine Gesicht angewandt wird, da dieses dadurch eher verschlechtert würde.

## Patentansprüche

1. Verfahren zur Verarbeitung digitaler Bilddaten von fotografischen Bildern, wobei Bilddaten von Personenaufnahmen mittels einer personenspezifischen Bildverarbeitung bearbeitet werden, welche sich von der unterscheidet, die zur Bearbeitung anderer Bilddaten verwendet wird **dadurch gekennzeichnet, dass** automatisch eine personenspezifische Bildverarbeitung gewählt wird, wenn mittels eines Objekterkennungsverfahrens Gesichter in den Bilddaten erkannt werden.

2. Verfahren nach Anspruch 1, **dadurch gekennzeichnet, dass** das Objekterkennungsverfahren Gesichter anhand von gesichtstypischen Dichteverläufen in Graustufenbildern der Bilddaten erkennt.

3. Verfahren nach Anspruch 1, **dadurch gekennzeichnet, dass** das Objekterkennungsverfahren auf einen in der Auflösung reduzierten Bilddatensatz angewandt wird, um Rechenzeit zu sparen.

4. Verfahren nach Anspruch 1, **dadurch gekennzeichnet, dass** beim Objekterkennungsverfahren Gesichtstemplates verwendet werden.

5. Verfahren nach Anspruch 1, **dadurch gekennzeichnet, dass** das Objekterkennungsverfahren mit verformbaren Gittern arbeitet.

6. Verfahren nach einem der vorhergehenden Ansprüche, **dadurch gekennzeichnet, dass** das Objekterkennungsverfahren nur auf vorausgewählte Bilder angewandt wird.

7. Verfahren nach Anspruch 1, **dadurch gekennzeichnet, dass** bei einer personenspezifischen Bildverarbeitung Bilddaten des Gesichts weichgezeichnet, insbesondere weniger stark verschärft oder verunschärft, werden.

8. Verfahren nach Anspruch 7, **dadurch gekennzeichnet, dass** hautfarbige Bereiche des Gesichts weichgezeichnet werden.

9. Verfahren nach Anspruch 7, **dadurch gekennzeichnet, dass** dichtehomogene Bereiche des Gesichts, also Bereiche, in denen keine Dichtesprünge auftreten weichgezeichnet werden.

10. Verfahren nach Anspruch 1, **dadurch gekennzeichnet, dass** bei einer personenspezifischen Bildverarbeitung der Rotanteil der Bilddaten erhöht oder der Blauanteil reduziert wird, um einen wärmeren Bildeindruck zu gewinnen.

11. Verfahren nach Anspruch 10, **dadurch gekennzeichnet, dass** der Farbanteil der hautfarbigen Bereiche verändert wird.

12. Verfahren nach Anspruch 1, **dadurch gekennzeichnet, dass** bei einer personenspezifischen Bildverarbeitung Dichteschwankungen der Bilddaten innerhalb hautfarbiger Bereiche des Gesichts geglättet werden.

13. Verfahren nach Anspruch 1, **dadurch gekennzeichnet, dass** automatisch eine personenspezifische Bildverarbeitung gewählt wird, wenn die Größe des erkannten Gesichts mehr als 10% der Bildfläche beträgt.

14. Verfahren nach Anspruch 1, **dadurch gekennzeichnet, dass** mehrere personenspezifische Bildverarbeitungsmöglichkeiten vorgesehen sind, deren Auswahl automatisch anhand einer Klassifizierung der Personenaufnahmen in Abhängigkeit von der Gesichtsgröße erfolgt.

15. Verfahren nach Anspruch 14, **dadurch gekennzeichnet, dass** eine Personenaufnahme bei einer Gesichtsgröße von unter 10% der Bildfläche als Gesamtpersonenaufnahme klassifiziert wird.

16. Verfahren nach Anspruch 14, **dadurch gekennzeichnet, dass** eine Personenaufnahme bei einer Gesichtsgröße von mehr als 10% der Bildfläche als Portraitaufnahme klassifiziert wird.

17. Verfahren nach Anspruch 14. **dadurch gekennzeichnet, dass** die Personenaufnahme bei einer Gesichtsgröße von mehr als 20% der Bildfläche als Großportrait klassifiziert wird.

18. Verfahren nach Anspruch 17, **dadurch gekennzeichnet, dass** bei einem Großportrait die Gesichtsposition geändert wird.

19. Verfahren nach Anspruch 17, **dadurch gekennzeichnet, dass** bei einem Großportrait ein auf das Gesamtbild umformatierter Bildausschnitt wiedergegeben wird, der so gewählt ist, dass Gesicht und Bildhintergrund in einem für eine Portraitaufnahme idealen Verhältnis zueinander stehen.

20. Verfahren nach Anspruch 16 oder 17, **dadurch gekennzeichnet, dass** bei einer Portraitaufnahme die gesamten Bilddaten oder die Bilddaten der Gesichtspartie weniger stark verschärft oder verunschärft werden.

21. Verfahren nach Anspruch 16 oder 17, **dadurch gekennzeichnet, dass** bei einer Portraitaufnahme die Augen verschärft werden, um die Aufnahme scharf und brilliant erscheinen zu lassen.

22. Verfahren nach Anspruch 16 oder 17, **dadurch gekennzeichnet, dass** bei einer Portraitaufnahme die direkte Gesichtsumgebung, insbesondere die Haare, verschärft werden.

23. Verfahren nach Anspruch 16 oder 17, **dadurch gekennzeichnet, dass** bei einer Portraitaufnahme extrem helle Partien innerhalb von Gesichtern abgedunkelt werden.

24. Verfahren nach Anspruch 16 oder 17, **dadurch gekennzeichnet, dass** bei eine die Gesichtsumgebung zum Bildrand hin zunehmend verunschärft wird, so dass der Hintergrund nicht ablenkt.
